# EUROPÄISCHE PATENTSCHRIFT

(11) **EP 0 758 743 B1**
(45) Veröffentlichungstag und Bekanntmachung des Hinweises auf die Patenterteilung: **25.09.2002**
(21) Anmeldenummer: 96109759.9
(22) Anmeldetag: 18.06.1996
(51) Int. Cl.: G01M 15/00, G01R 31/00

(54) **Vorrichtung zum drahtlosen Austausch von Daten zwischen einer Serviceeinrichtung und einem Steuergerät in einem Kraftfahrzeug**
Device for wireless exchanging data between a service station and a control device in a motor vehicle
Dispositif d'échange sans fil de données entre un appareil de service et un appareil de commande dans une véhicule à moteur

(30) Priorität: 12.08.1995 DE 19529741
(43) Veröffentlichungstag der Anmeldung: 19.02.1997
(73) Patentinhaber: Bayerische Motoren Werke Aktiengesellschaft, 80788 München (DE)
(72) Erfinder: Godau, Ralf, 82178 Puchheim (DE); Dammann, Eberhard, 85598 Baldham (DE); Penzenstadler, Fritz, 85452 Moosinning (DE)

(56) Entgegenhaltungen:
- DE-A- 3 538 687
- DE-A- 4 334 859
- US-A- 4 263 945
- US-A- 4 398 172
- US-A- 5 003 477

## Beschreibung

Die Erfindung bezieht sich auf eine Vorrichtung mit den Merkmalen des Oberbegriffs von Patentanspruch 1.

Bei einer derartigen, aus der DE 43 34 859 A1 bekannten Vorrichtung dient der Austausch von Daten dazu, das bzw. die Steuergeräte zu testen und/oder zu programmieren. Der Einsatz der Vorrichtung erfolgt im Rahmen der Fahrzeugfertigung am Produktionsband und in Servicewerkstätten. Der Austausch der Daten geschieht per Funk oder über eine Infrarot-Übertragungsstrecke. Als Sende-Empfangseinrichtung (SEE) wird eine ohnehin vorhandene Einrichtung des Kraftfahrzeugs verwendet, die beim üblichen Betrieb beispielsweise im Rahmen einer Fernbedienung, d.h. einer durch Austausch von Frage-Antwort-Signalen arbeitenden Zugangskontrolleinrichtung eingesetzt ist.

Die bekannte Vorrichtung ist zwar auf den ersten Blick in ihrem Aufbau einfach und kostengünstig. Sie setzt aber voraus, daß jedes Kraftfahrzeug, das getestet bzw. programmiert werden soll, mit einer derartigen SEE versehen ist. Auch ist Voraussetzung, daß unterschiedliche Modellreihen mit einer zumindest vergleichbaren SEE versehen sind. Auch dies ist tatsächlich nicht der Fall, da Zugangskontrolleinrichtungen ein- und desselben Herstellers auf Funk- oder Infrarot-Basis im Gebrauch sind. Ist es notwendig, auch Kraftfahrzeuge, die bereits einige Zeit im Verkehr sind, auf diese Weise zu testen und/oder zu programmieren, so ergeben sich zusätzliche Probleme, da es häufig an den apparativen Voraussetzungen gerade bei derartigen Kraftfahrzeugen fehlt. Zusätzlich ist die Datenübertragungsrate der Fernbedienung viel zu gering für die zur Programmierung der Steuergeräte notwendigen Datenmengen.

Der Erfindung liegt die Aufgabe zugrunde, eine Vorrichtung der eingangs genannten Art zu schaffen, die universell bei allen Kraftfahrzeugen ggf. auch mehrerer Hersteller verwendbar ist.

Die Erfindung löst diese Aufgabe durch die kennzeichnenden Merkmale des Patentanspruchs 1.

Die abnehmbare SEE ist auf die Erfordernisse und technischen Gegebenheiten der Serviceeinrichtung, z. B. eine hohe Datenübertragungsrate zugeschnitten. Im Gegensatz dazu ist bei der bekannten Vorrichtung eine Anpassung der Serviceeinrichtung an die zumeist unterschiedlichen SEE' s der Kraftfahrzeuge notwendig. Voraussetzung für die Wirksamkeit der SEE ist lediglich eine elektrische Verbindung zu dem bzw. den Steuergeräten im Kraftfahrzeug. Diese Verbindung kann vorzugsweise über die On-Board-Stromkreise des Kraftfahrzeugs erfolgen.

Deshalb ist es vorteilhaft, die SEE mit einem elektrischen Stecker zu versehen, mit dem sie kontaktgebend auf einer Diagnosesteckdose des Kraftfahrzeugs aufsetzbar ist. Eine derartige Steckdose ist in der Regel in jedem Kraftfahrzeug vorhanden. Da diese Steckdosen im Rahmen der Kraftfahrzeugindustrie bzw. beim jeweiligen Hersteller genormt sind, ergibt sich damit die universelle Verwendbarkeit ohne weiteres. Über die Steckdose erfolgt dann auch die Energieversorgung der SEE.

Der drahtlose Austausch von Daten kann dann zu Problemen führen, wenn mehrere Serviceeinrichtungen nebeneinander betrieben werden und mit mehreren SEE's für mehrere Kraftfahrzeuge kommunizieren. In diesem Fall können die Daten am einfachsten dadurch voneinander unterschieden werden, daß sie als Datentelegramme mit einem Identifizierungskennzeichen versehen sind. Damit ist sichergestellt, daß jede Serviceeinrichtung nur mit "ihrer" zugeordneten SEE Daten austauscht bzw. im Falle einer einzigen Serviceeinrichtung diese mit der jeweils richtigen SEE kommuniziert.

Der Einsatz der Erfindung kann, wie bereits ausgeführt, im Rahmen einer Servicewerkstatt oder im Rahmen der Fertigung des Kraftfahrzeugs erfolgen. Für die Fertigungsanwendung kann es vorteilhaft sein, mehrere Serviceeinrichtungen in einem Feld anzuordnen, die in der Lage sind, mit einer oder mehreren SEE's zu kommunizieren. Im Gegensatz zu der vorhergenannten starren 1:1 Zuordnung kann diese Zuordnung variabel sein. So ist es möglich, die Serviceeinrichtungen in einem Feld anzuordnen, indem ein Abschnitt oder das komplette Montageband verläuft. Die Serviceeinrichtungen können dann nacheinander mit ein und derselben SEE des Kraftfahrzeugs kommunizieren, das sich gerade in ihrem Sende- und Empfangsbereich befindet. Verläßt das Kraftfahrzeug diesen Bereich, so wird es an die räumlich nachfolgende Serviceeinrichtung "übergeben", die nun ihrerseits Daten mit der SEE austauscht. Die zuvor tätige Serviceeinrichtung übernimmt ihrerseits den Datenaustausch mit der SEE des auf dem Montageband nachfolgenden Kraftfahrzeugs.

Durch den aufeinanderfolgenden Austausch von Daten mit mehreren Serviceeinrichtungen ist es möglich, ein Kraftfahrzeug im Rahmen der Fertigung sukzessive zu programmieren. Mehrere Steuergeräte können nacheinander programmiert werden. Auch ist es möglich, Fehlerspeicher von Steuergeräten auszulesen und zu löschen. Einträge in die Fehlerspeicher ergeben sich zumeist durch vorübergehende Fehlzustände, beispielsweise noch nicht installierte bzw. aktivierte Sensoren, Stromverbindungen usw. Ebenso ist es möglich, evtl. Fehlmontage relativ schnell zu erkennen und noch während des Montageprozesses abzustellen. Auch können die mit den einzelnen Serviceeinrichtungen aufgenommenen Daten eines Kraftfahrzeugs gesammelt und im Rahmen der Endkontrolle bewertet werden. Noch bestehende Fehlerzustände können dabei von zwischenzeitlich beseitigten Fehlern unterschieden werden und es kann bedarfsgerecht eine Nacharbeit durchgeführt werden.

Anhand der Zeichnung ist die Erfindung weiter erläutert. Es zeigt
- Fig. 1: eine mobile Sende-Empfangseinrichtung (SEE), die abnehmbar an einem Kraftfahrzeug angeordnet werden kann,
- Fig. 2: den Einsatz der SEE im Rahmen einer Servicewerkstatt
- Fig. 3: den Einsatz der SEE im Rahmen der Fahrzeugmontage.

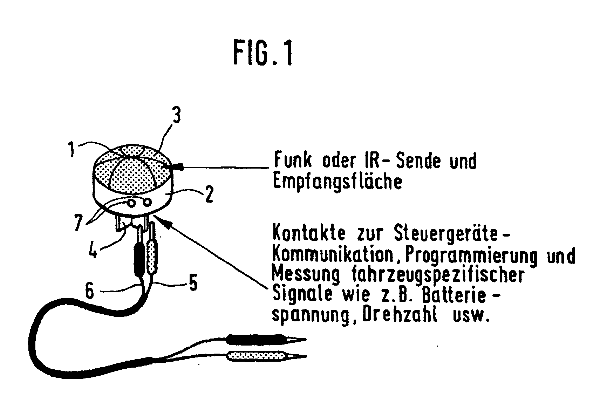

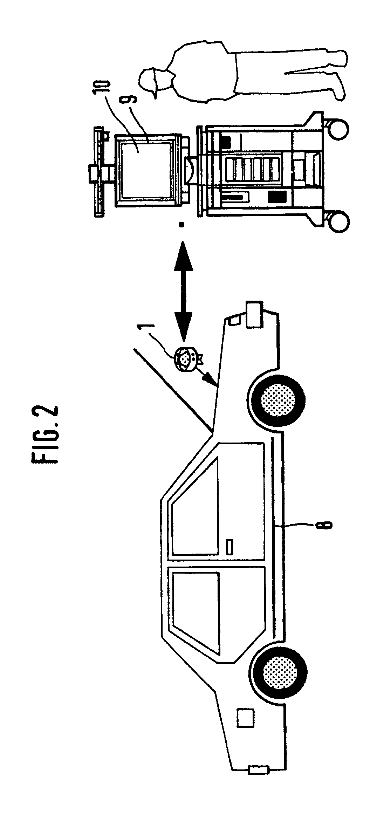

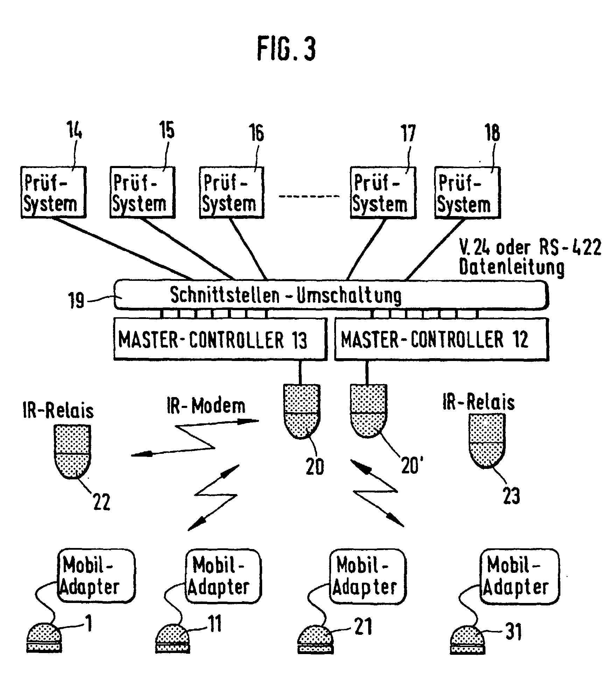

Die in Fig. 1 gezeigte SEE 1 enthält in einem Gehäuse 2 Prüf- und Kommunikationsschaltkrelse (nicht dargestellt). Eine Funk- oder Infrarot-Sende- und Empfangsfläche 3 ist Teil einer Funk- bzw. Infrarot-Übertragungsstrecke zu einer Serviceeinrichtung (vgl. Fig. 2 und 3). Ferner ist am Boden des Gehäuses 2 ein Stecker 4 angeordnet, der mehrere Steckkontakte enthält und kontaktgebend In eine Diagnosesteckdose im Motorraum eines Kraftfahrzeugs eingesteckt werden kann (Fig. 2). Über diese Steckdose wird das Modul 1 mit Strom versorgt.

Das Modul 1 dient zur seriellen Kommunikation zwischen der Serviceeinrichtung und den im Kraftfahrzeug verbauten Steuergeräten (nicht-dargestellt) und zur Messung von fahrzeugspezifischen Signalen. Die Übertragung zwischen dem Modul 1 und der Serviceeinrichtung findet kabellos statt. Für Ausnahmefälle kann zusätzlich eine Verbindung über ein Kabel 5 hergestellt werden, um bei evtl. Abschattungen, beispielsweise bei geschlossener Motorhaube mit aufgestecktem Modul 1 den Datenaustausch sicherzustellen.

Die Messung der fahrzeugspezifischen Signale findet direkt über den Diagnosestecker statt. Signale, die nicht auf dem Diagnosestecker anliegen, können durch ein separates Meßkabel 6 abgegriffen und dem Modul 1 über eine Buchse 7 zugeführt werden. Die auf diese Weise gewonnen Daten werden über die Sende- und Empfangsfläche 3 auf die Serviceeinrichtung übertragen. Entsprechend ist es möglich, von der Serviceeinrichtung Daten auf das Modul 1 zu übertragen, um beispielsweise Programmänderungen einzelner Steuergeräte durchzuführen. Diese Daten werden auf demselben Weg, der für das Auslesen der Daten aus den Steuergeräten vorgesehen ist, in die Steuergeräte eingegeben.

In Fig. 2 ist der Einsatz des Moduls 1 in einer Werkstatt dargestellt. Das Modul 1 sitzt auf der nicht im einzelnen gezeigten Diagnosesteckdose des Kraftfahrzeugs 8 und stellt drahtlos eine Funk- bzw. Infrarotverbindung zu einer Serviceeinrichtung 9 her. Die Einrichtung 9 ist mit einer entsprechenden Sende- und Empfangseinrichtung verbunden und ermöglicht es, Daten des Kraftfahrzeugs auf einem Bildschirm 10 darzustellen. Diese Daten werden vom Modul 1 zur Einrichtung 9 gesandt. Umgekehrt können Daten, beispielsweise in Form von Kennlinien und Programmschritten und dgl., von der Einrichtung 9 über das Modul 1 in das Kraftfahrzeug 8 eingegeben werden und dadurch Steuergeräte mit entsprechend anderen Inhalten versehen werden.

Ergänzend oder alternativ zur Serviceeinrichtung 9 kann über das Modul 1 auch eine Kommunikationsverbindung zu einer Sende-/Empfangseinrichtung hergestellt werden, die mit einem Inhouse-Datennetz verbunden ist. Über das Netz kann ein Reparaturannehmer mit dem Kfz kommunizieren und aufgrund der Fehler-Daten einen Reparaturauftrag vorbereiten. Ebenso ist es möglich, mit dem am Netz angeschlossenen Hersteller Daten auszutauschen und Updates der Steuergeräte, Fehlerstatistiken usw. durchzuführen.

Der Einsatz mehrerer Module 1 im Rahmen der Fertigung ist schematisch in Fig. 3 dargestellt. Die Module sind mit 1, 11, 21 und 31 bezeichnet und befinden sich in bzw. an Kraftfahrzeugen, die nicht im einzelnen dargestellt sind und die ein Montageband (ebenfalls nicht gezeigt) durchlaufen. Master-Kontroller 12 und ein zweiter Master-Kontroller 13 mit Redundanzfunktion entsprechen in ihrer Wirkungsweise der Serviceeinrichtung 9 von Fig. 2. Diese stehen mit nicht im einzelnen gezeigten Prüfsystemen 14 bis 18 über eine Schnittstellenumschaltung 19 in Verbindung, die über ein einziges Infrarotmodem 20 bzw. 20' mit Sende- und Empfangsfunktionen sämtliche eingesetzten Module, hier 1, 11, 21 und 31 bedient. Ferner sind Relaisstationen 22 und 23 angeordnet, die ebenfalls ein Infrarot-Sende- und Empfangsteil enthalten und die als optische Relaisstationen arbeiten. Die Relais 22 und 23 können untereinander auch über eine elektrische Leitung verbunden werden, um optische Hindernisse, z.B. ein Trennwand zu überbrücken.

Schnittstellenumschaltung 19 und Anbindung der Prüfsysteme 14 bis 18 können alternativ über ein lokales Netzwerk realisiert werden.

Die Verwendung der Module 1, 11, 21 und 31 erfolgt in folgender Weise:

Die Module werden an einer Initialisierungsstation (nicht dargestellt) als erste Station im Fertigungsablauf bereitgestellt. Bei Anbringen am Kraftfahrzeug wird eine Initialisierung, d.h. eine Zuordnung von dem jeweiligen Modul und dem betroffenen Kraftfahrzeug durchgeführt. Dabei wird dem Master-Kontroller 12 bzw. 13 die Teilnehmeradresse des Moduls und ein Fahrzeug-Steuerschlüssel des gerade adaptierten Fahrzeugs mitgeteilt. Mit diesem Schlüssel handelt es sich um eine eindeutige Erkennung für ein Fahrzeug in der Fertigung entsprechend beispielsweise der Fahrgestellnummer.

Anschließend durchläuft das Fahrzeug mehrere Prüfstationen, die jeweils mit einem Prüfsystem 14 bis 18 versehen sind. In jeder Prüfstation erfolgt eine Abarbeitung von Prüfabläufen, die im Gegensatz zu dem bisherigen drahtgebundenen Verfahren drahtlos über eine infrarot-Übertragungsstrecke von Modem 20 zum jeweiligen Modul, ggf. unter Einsatz der Relaisstationen 22 und/oder 23 vorgenommen wird. Der Master-Kontroller 12, 13 adressiert laufend alle definierten Teilnehmeradressen. Da nicht immer alle Module an Fahrzeugen installiert sind und nicht alle Module permanent in Prüfabläufen benötigt werden, findet im Master-Kontroller 12, 13 eine automatische Priorisierung statt: Teilnehmer, die sich nicht melden, werden zurückgestuft und dann nur noch jedes zweite oder jedes dritte mal usw. adressiert. Antwortet ein zurückgestufter Teilnehmer auf einen Auftrag, wird er sofort in seiner Priorisierung hochgestuft.

Das Modul verbleibt im weiteren Fertigungsablauf am Kraftfahrzeug. Am Ende des Feldes wird es abgenommen und zur Initialisierungsstation zurückgebracht.

## Patentansprüche

1. Vorrichtung bestehend aus einer Serviceeinrichtung (9; 20, 20') und einer Sende-Empfangseinrichtung (1, 11, 21, 31) zum drahtlosen Austausch von Daten zwischen der Serviceeinrichtung (9; 20, 20') und einem in einem Kraftfahrzeug (8) eingebauten Steuergerät, wobei die Sende-Empfangseinrichtung (1, 11, 21, 31) im Gebrauch mit dem Steuergerät in Verbindung steht, **dadurch gekennzeichnet, dass** die Sende-Empfangseinrichtung (1, 11, 21, 31) als separates Modul abnehmbar am Kraftfahrzeug (8) anordenbar ist.

2. Vorrichtung nach Anspruch 1, **dadurch gekennzeichnet, dass** die Sende-Empfangseinrichtung einen elektrischen Stecker (4) äufweist, mit dem sie kontaktgebend auf einer Diagnosesteckdose des Kraftfahrzeugs aufsetzbar ist.

3. Vorrichtung nach Anspruch 1 oder 2, **dadurch gekennzeichnet, dass** die mit der Sende-Empfangseinrichtung ausgetauschten Daten als Datentelegramm mit einem Identifizierungskennzeichen ausgebildet sind.

4. Vorrichtung nach einem der Ansprüche 1 bis 3, **dadurch gekennzeichnet, dass** mehrere Serviceeinrichtungen (20, 20', 22, 23) in einem Feld angeordnet sind und mit der Sende-Empfangseinrichtung (1, 11, 21, 31) eines im Feld befindlichen Kraftfahrzeugs kommunizieren.

5. Vorrichtung nach Anspruch 4, **dadurch gekennzeichnet, dass** die Serviceeinrichtungen mit mehreren Sende-Empfangseinrichtungen (1, 11, 21, 31) kommunizieren, die mit jeweils einem Kraftfahrzeug innerhalb eines Feldes verbunden sind.

6. Vorrichtung nach Anspruch 4 oder 5, **dadurch gekennzeichnet, dass** die Serviceeinrichtungen mit den einzelnen Sende-Empfangseinrichtung (1, 11, 21, 31) nacheinander kommunizieren.

## Claims

1. A device comprising a servicing device (9;20, 20') and a transmitting-receiving device (1, 11, 21, 31) for the wireless exchange of data between the servicing device (9; 20, 20') and a control unit built into a motor vehicle (8), whereby the transmitting-receiving device (1, 11, 21, 31) remains in connection with the control unit during use, **characterised in that** the transmitting-receiving device (1, 11, 21, 31) can be removably arranged on the motor vehicle (8) as a separate module.

2. A device according to Claim 1, **characterised in that** the transmitting-receiving device has an electrical plug-in connector (4), with which it can be plugged into a diagnostic socket of the motor vehicle so as to make contact.

3. A device according to Claim 1 or Claim 2, **characterised in that** the data exchanged using the transmitting-receiving device are formed as a data telegram with an identifying reference character.

4. A device according to one of the Claims 1 to 3, **characterised in that** several servicing devices (20, 20', 22, 23) are arranged in an area and communicate with the transmitting-receiving device (1, 11, 21, 31) of a motor vehicle in the area.

5. A device according to Claim 4, **characterised in that** the servicing devices communicate with several transmitting-receiving devices (1, 11, 21, 31), each of which is joined to a motor vehicle within an area.

6. A device according to Claim 4 or Claim 5, **characterised in that** the servicing devices communicate with the individual transmitting-receiving devices (1, 11, 21, 31) sequentially.

## Revendications

1. Dispositif composé d'une installation de service (9, 20, 20') et d'une installation émission/réception (1, 11, 21, 31) pour échanger des données par une liaison sans fil entre une installation de service (9, 20, 20') et un appareil de commande installé sur un véhicule (8), l'installation d'émission/réception (1, 11, 21, 31) communiquant avec l'appareil de commande,
**caractérisé en ce que**
l'installation émission/réception (1, 11, 21, 31) est installée comme module distinct sur un véhicule (8), de manière amovible.

2. Dispositif selon la revendication 1,
**caractérisé en ce que**
l'installation émission/réception comporte un connecteur électrique (4) qui permet de l'installer avec contact dans la prise de diagnostic du véhicule automobile.

3. Dispositif selon la revendication 1 ou 2,
**caractérisé en ce qu'**
il échange des données avec l'installation émission/réception sous la forme de télégrammes de données munis de caractéristiques d'identification.

4. Dispositif selon l'une des revendications 1 à 3,
**caractérisé en ce que**
plusieurs installations de service (20, 20', 22, 23) sont installées dans une zone et communiquent avec l'installation émission/réception (1, 11, 21, 31) d'un véhicule qui se trouve dans cette zone.

5. Dispositif selon la revendication 4,
**caractérisé en ce que**
les installations de services communiquent avec plusieurs installations émission/réception (1, 11, 21, 31) reliées à chaque fois à un véhicule dans une zone.

6. Dispositif selon les revendication 4 ou 5,
**caractérisé en ce que**
les installations de service communiquent successivement avec les différentes installations émission/réception (1, 11, 21, 31).
